# FASCICULE DE BREVET EUROPEEN

(11) **EP 0 730 329 B1**
(45) Date de publication et mention de la délivrance du brevet: **02.06.1999**
(21) Numéro de dépôt: 96410015.0
(22) Date de dépôt: 28.02.1996
(51) Int. Cl.: H02G 3/04, H02G 3/28

(54) **Gaine pour la fixation de coffrets électriques et/ou analogues en saillie sur un mur ou bien à l'intérieur d'un mur dans un logement collectif ou individuel, un bâtiment tertiaire ou industriel**
Kanal für das auf Putz oder unter Putz Montieren von elektrischen Gehäusen oder dergleichen in Etagenwohnungen, Wohnhäusern, Geschäften oder industriellen Anlagen
Channel for surface or flusch mounting of electrical boxes or similar on a wall in an appartment, an individual house, a shop or an industrial plant

(30) Priorité: 01.03.1995 FR 9502654
(43) Date de publication de la demande: 04.09.1996
(73) Titulaire: SCHNEIDER ELECTRIC SA, 92100 Boulogne Billancourt (FR)
(72) Inventeur: Canali, Pascal, 38050 Grenoble Cedex 09 (FR)
(74) Mandataire: Hecké, Gérard

(56) Documents cités:
- EP-A- 0 305 338
- CH-A- 512 841
- US-A- 3 354 301

## Description

La présente invention concerne une gaine pour la fixation de coffrets électriques et/ou analogues en saillie sur un mur ou bien à l'intérieur d'un mur dans un logement, lesdits coffrets logeant de appareillages assurant des fonctions électriques telles que la distribution électrique, la téléphonie ou bien la domotique, voire des fonctions non électriques (gaz,eau).

Ces coffrets électriques sont de manière connue fixés dans des bacs ou cuves dans lesquels ils sont raccordés électriquement à des câbles d'alimentation acheminés vers l'intérieur des bacs, les bacs ayant été positionnés puis encastrés dans un mur ou bien fixés en saillie sur un mur.

Dans ce genre d'installations, des modules nécessitant des types d'alimentation différents sont quelquefois fixés à proximité les uns des autres, par exemple des tableaux d'abonnés alimentés par des courants forts à côté de tableaux de réseau intérieur alimentés en courant faible. Or, la disposition côte à côte de ces deux types de courant entraîne des risques de perturbations du fonctionnement du matériel, engendrées par les champs magnétiques crées par les différents courants.

Un autre inconvénient de ces installations tient en ce qu'il est nécessaire de positionner le bac préalablement à sa fixation et qu'un positionnement précis du bac peut être difficile à obtenir, particulièrement lorsque ce bac doit être fixé entre deux banches métalliques. Dans ce cas en effet, la fixation du bac sur les banches est le plus souvent réalisée au moyen de kits magnétiques et l'on observe un manque de fiabilité du positionnement, et des déformations des tôles lors de la coulée du béton vibré pendant la fabrication de la cloison.

En outre, dans ce type d'installation, les dimensions et le nombre de modules dans chaque bac est fixé dès le départ et peut difficilement évoluer, ce qui est le cas par exemple dans les logements où les coffrets électriques sont encastrés et les autres éléments (domotique) sont apparents. Le remplacement d'un coffret par un autre est difficile, particulièrement lorsqu'il s'agit de coffrets alimentés par des courants différents.

On connaît une gaine telle que décrite dans le document EP-A-305338, ladite gaine étant constituée par une colonne de section transversale en forme de U, comportant une paroi de fond et deux parois latérales, ladite colonne délimitant un logement de forme sensiblement parallélépipédique. Sur la paroi de fond sont fixés des couloirs logeant chacun un ensemble de câbles destinés au transport du courant fort, tandis que sur les deux parois latérales sont fixés des couloirs destinés à loger pour les uns, des câbles de courant faible, et pour les autres, des câbles téléphoniques. Les coffrets électriques sont fixés sur des rails formés sur les bords libres des parois latérales précitées, et sont entourés par les couloirs.
Or, là encore, des appareils réalisant des fonctions différentes cohabitent. Ainsi, les appareils alimentés par des courants forts sont disposés à proximité d'autres appareils alimentés par des courants faibles. Il en résulte que les champs magnétiques crées peuvent entraîner des perturbations des appareils.

La présente invention résout ces problèmes et propose une gaine pour la fixation de coffrets, tableaux et/ou analogues en saillie sur ou bien à l'intérieur d'un mur, de conception simple, dont l'installation est particulièrement aisée, rapide et précise, qui permet l'intégration et le regroupement de modules électriques de fonctions différentes en supprimant les risques d'incompatibilité entre les différents courants, et dont le contenu est évolutif, d'où il résulte une grande souplesse d'utilisation. Cette gaine présente en outre une plus grande souplesse et facilité de circulation des câbles.

A cet effet, la présente invention a pour objet une gaine selon la revendication 1. Grâce à la création de ces zones délimitées par les cloisons horizontales, les appareils situés dans l'une de ces zones sont séparés des appareils situés dans les autres zones. Il s'ensuit que les risques de perturbation par les champs magnétiques sont réduits.

Avantageusement, les fonctions électriques précitées sont la distribution électrique et/ou la domotique et/ou la téléphonie et/ou le contrôle d'accès.

Selon une réalisation particulière, le logement précité comporte un premier et un second compartiment de forme sensiblement parallélépipédique juxtaposés dans le sens de la profondeur de la colonne, le premier compartiment recevant au moins deux couloirs séparés, juxtaposés dans le sens de la largeur de la colonne et destinés au transport de courants d'au moins deux types différents, le second compartiment logeant les coffrets précités.

Selon une caractéristique particulière, le premier compartiment comporte deux couloirs destinés à recevoir respectivement les câbles de transport du courant faible et les câbles de transport du courant fort.

Suivant une variante de réalisation, les couloirs précités sont au nombre de trois et comprennent deux couloirs latéraux recevant des câbles de transport du courant faible et un couloir central recevant des câbles de transport du courant fort .

Suivant une caractéristique particulière, les couloirs sont formés par des goulottes fixées sur la paroi de fond du premier compartiment et comportant sur leur face avant une ouverture permettant le raccordement des câbles aux appareillages correspondants.

Selon une autre caractéristique, les coffrets précités sont fixés sur au moins un rail solidaire de la paroi de fond du premier compartiment et s'étendant parallèlement à la direction longitudinale de la colonne.

Avantageusement, les deux bords longitudinaux de l'ouverture de la goulotte centrale forment respectivement deux rails de fixation des coffrets s'étendant vers l'intérieur ou l'extérieur de la goulotte précitée..

Selon une autre caractéristique, les différentes zones sont fermées, sur la face avant du second compartiment, en fonction de l'accessibilité recherchée, par un plastron et/ou une porte ou bien un panneau fixe n'autorisant l'accès qu'au moyen d'un outil.

Avantageusement, les portions de goulottes dans lesquelles aucun raccordement n'est effectué sont fermées par des plaques isolantes ou réalisées en un matériau permettant d'assurer la continuité de masse ,en fonction de l'objectif recherché (isolation électrique ou CEM), lesdites plaques étant fixées sur les bords des ouvertures des goulottes correspondantes .

Selon une autre caractéristique, elle comporte un second logement définissant un troisième compartiment, situé à l'arrière du premier compartiment précité , et contenant un ensemble insonorisant .

Selon une autre caractéristique, lorsqu'installée, la gaine est en appui sur le sol.

Avantageusement la colonne s'étend sur toute la hauteur du mur .

De préférence, la colonne est réalisée en un matériau métallique ou plastique en fonction de l'objectif recherché (CEM ou isolation électrique).

Avantageusement, elle comporte une zone réservée à la distribution électrique comprenant un tableau d'abonné, et/ou une zone réservée au contrôle d'accès comprenant un interphone et/ou une zone réservée à la domotique comprenant un boîtier de contrôle du chauffage, et/ou une zone réservée à la téléphonie comprenant un tableau de réseau intérieur.

Avantageusement, les câbles sont acheminés à travers la gaine, à partir des dalles supérieures ou inférieures du logement.

Mais d'autres avantages et caractéristiques de l'invention apparaîtront mieux dans la description détaillée qui suit et se réfère aux dessins annexés donnés uniquement à titre d'exemples et dans lesquels :

La figure 1 est une vue en perspective éclatée d'une forme particulière de réalisation de la gaine de l'invention.

La figure 2 est une vue en perspective de cette même gaine en position encastrée dans un mur.

La figure 3 est une vue similaire à la précédente, les modules électriques étant agencés différemment à l'intérieur de la gaine.

La figure 4 est une vue en coupe transversale d'une réalisation de la gaine comportant trois couloirs de circulation des câbles.

La figure 5 est une vue en coupe transversale d'une autre réalisation de la gaine dans laquelle sont prévus deux couloirs de circulation des câbles.

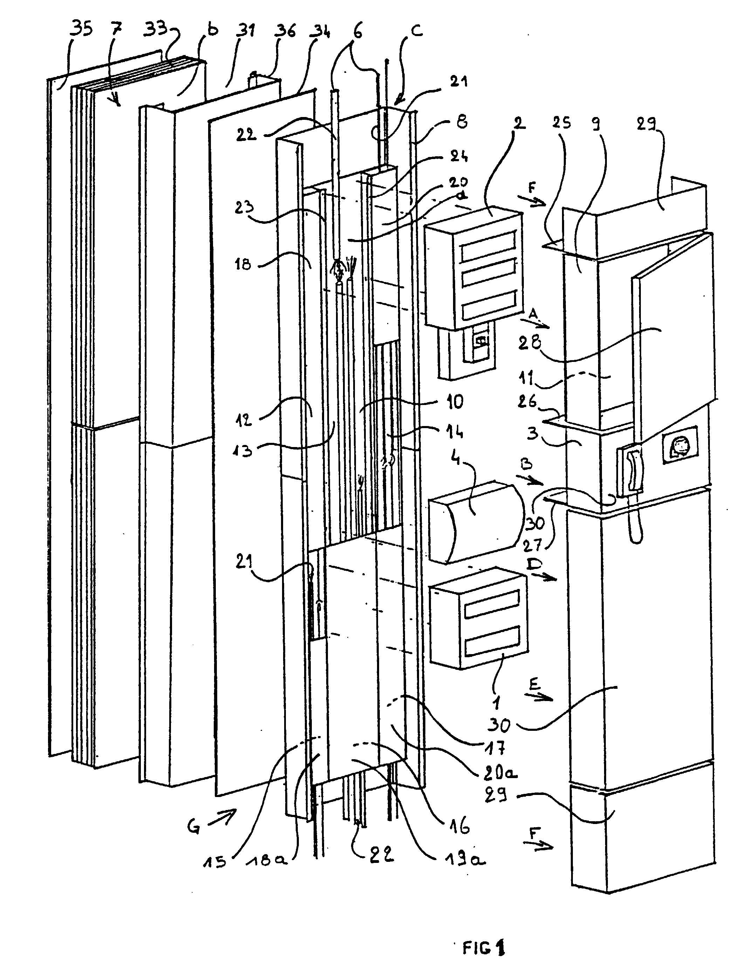

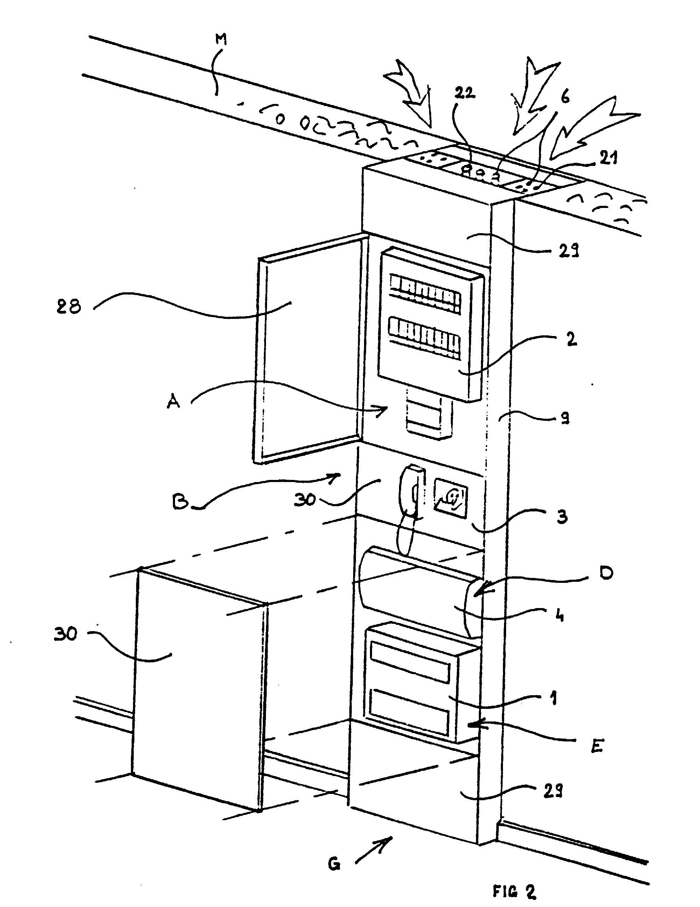

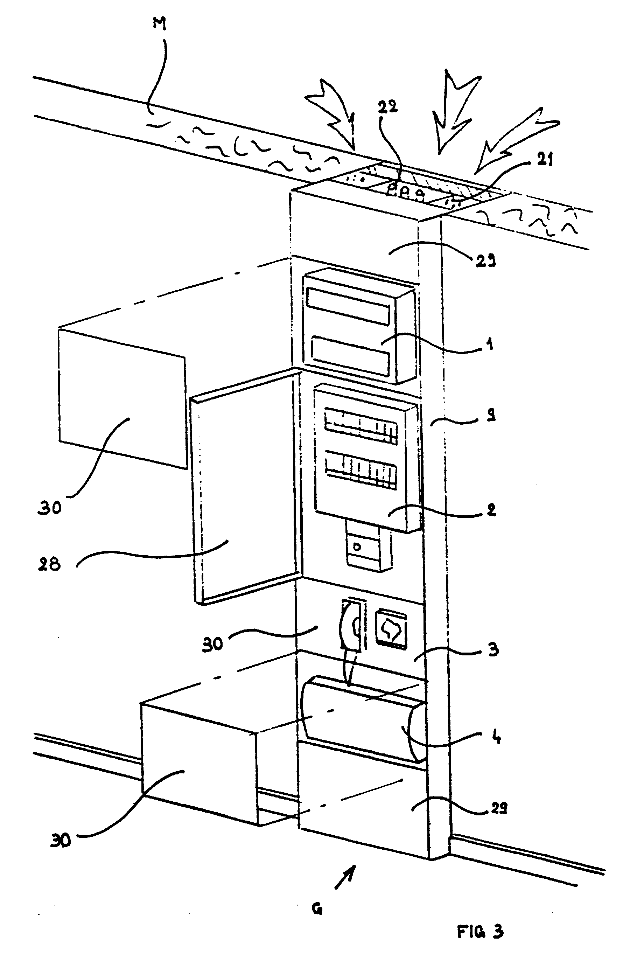

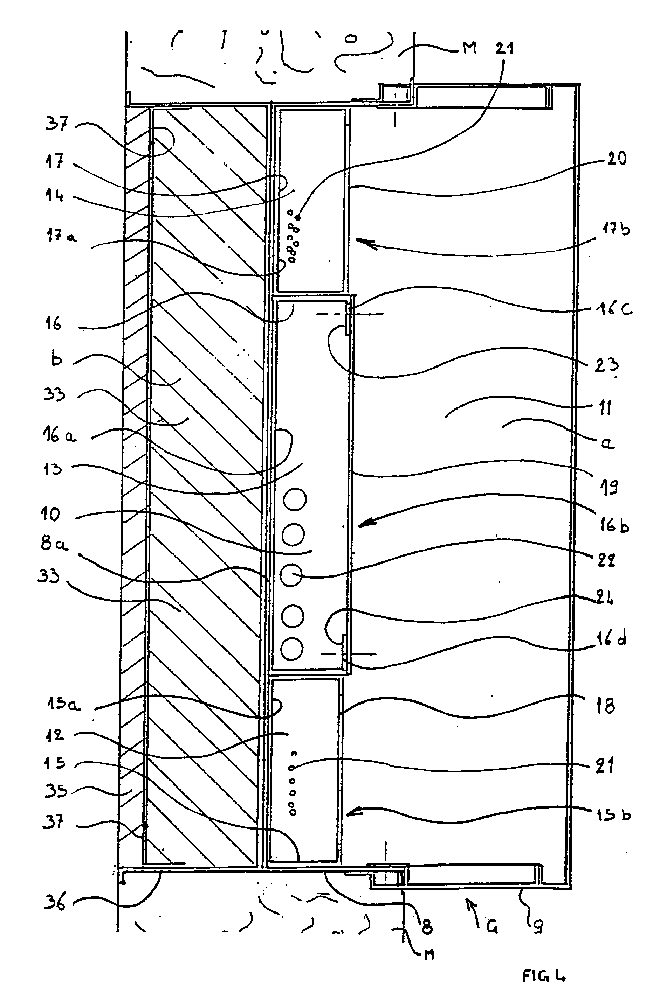

Sur la figure 1, on voit une gaine G conforme à une première réalisation de l'invention dans laquelle vont être fixés des coffrets 1, tableaux d'abonnée 2 ou analogues 3, 4 et qui est destinée à être encastrée dans le mur M d'un logement collectif. Cette gaine G est formée par une colonne métallique ou en plastique C de forme parallélépipédique comportant deux logements séparés (a, b) également parallélépipédiques de même longueur et juxtaposés suivant la profondeur de la colonne C. Ces deux logements a, b sont destinés à recevoir respectivement les coffrets électriques 1, 2, 3, 4 avec leurs câbles d'alimentation 6, et un ensemble insonorisant 7. Ce premier logement a est délimité par deux parties de section en forme de U 8, 9 dont l'une 8 est destinée à être encastrée dans le mur M tandis que l'autre 9 restera en saillie sur ce mur. Ces deux parties 8, 9 délimitent un premier et un second compartiment 10, 11 juxtaposés suivant la profondeur de la colonne C et destinés respectivement, aux câbles d'alimentation 6 et aux coffrets d'appareillages électriques 1, 2. En se reportant également à la figure 4, on voit que ce premier compartiment 10 comprend trois couloirs de circulation de câbles 12, 13, 14 juxtaposés dans le sens de la largeur de la colonne C et formés respectivement par trois goulottes 15, 16, 17 parallélépipédiques fixées par leurs parois de fond 15a, 16a, 17a à la paroi de fond 8a de la première partie 8, et comportant sur leur face avant des ouvertures 15b, 16b, 17b obturables par des plaques 18, 19, 20. Ces plaques et goulottes sont réalisées de préférence en plastique, si l'on veut obtenir une isolation électrique, oubien en métal si l'on veut réaliser une continuité de masse (CEM). Les deux goulottes latérales 15, 17 sont destinées à recevoir les câbles de courant faible 21, tandis que la goulotte centrale 16 est destinée à recevoir les câbles de courant fort 22. On notera également que ces goulottes pourraient être formées différemment, par exemple par pliage de la paroi de fond 8a.

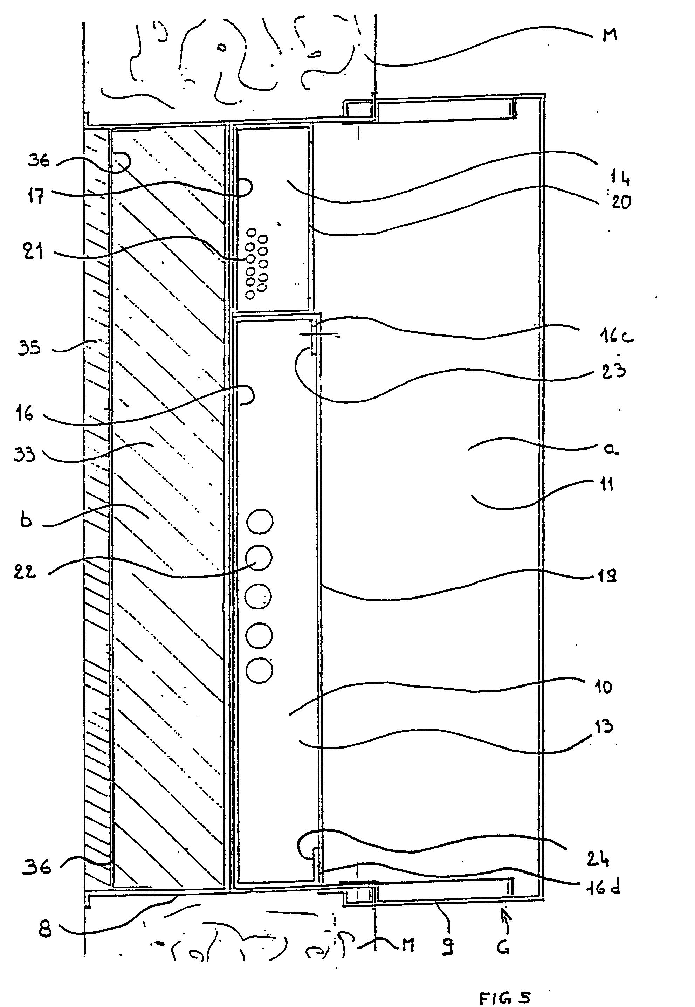

En se reportant à la figure 5, on voit une autre réalisation de la gaine G selon laquelle les couloirs 12, 13 sont au nombre de deux recevant respectivement deux ensembles de câble de courant faible 21 et fort 22. Sur les figures 1, 4 et 5, on voit que les bords longitudinaux 16c, 16d de la goulotte 16 associée aux courants forts sont pliés en équerre vers l'intérieur de la goulotte 16 pour former deux rails de fixation 23, 24 pour les coffrets et tableaux 1,2,3,4. On voit ainsi que ces coffrets et tableaux peuvent être fixés successivement, dans l'ordre choisi et aux emplacements souhaités, sur ces rails 23, 24 qui s'étendent sensiblement sur toute la hauteur de la colonne C. Avantageusement, les appareils réalisant des fonctions électriques de même nature, étant de ce fait alimentés par un même type de courant (courants faibles ou courants forts), sont regroupés en une même zone. C'est ainsi que sont avantageusement crées dans la gaine G, comme ceci est visible sur les figures 1 à 3, quatre zones techniques A, B, D, E réservées respectivement à la distribution électrique, au contrôle d'accès, à la domotique et à la téléphonie et vidéophonie. Sur les figures 1 et 2, la gaine G comprend successivement un tableau d'abonnés 2 alimenté en courant fort, un portier interphone 3, un boîtier de régulation du chauffage ou d'une alarme 4 alimenté en courants faibles ou forts et un tableau de réseau intérieur 1 alimenté en courants faibles. Sur la figure 3, la gaine G comprend successivement un tableau de réseau intérieur 1, un tableau d'abonné 2, un interphone 3 et un boîtier de régulation 4. Ces coffrets et tableaux 1, 2, 3, 4 sont logés dans la seconde partie de section en forme de U précitée 9.

Comme ceci est plus particulièrement visible sur la figure 1, les différentes zones A, B, D, E,F sont séparées par des cloisons horizontales 25, 26, 27 destinées à être fixées sur la seconde partie précitée 9 et sur les rails 23, 24. Les zones A, B, D, E,F sont fermées sur la face avant de la colonne C par une porte 28, des plastrons 29, ou un panneau fixe 30 ne pouvant être démonté qu'à l'aide d'un outil, en fonction de l'accessibilité recherchée pour les appareillages, ces éléments 28, 29, 30 permettant d'obtenir une intégration parfaite de la gaine G dans un logement. On notera que d'autres éléments auraient pu être placés dans la gaine G tels une centrale de contrôle du bâtiment pour la fonction domotique, par exemple. Les plastrons 29 pourront être constitués par des plastrons métalliques ou plastiques, oubien des plaques de plâtre.

Sur les figures, on voit également que, comme précédemment mentionné, la gaine G de l'invention comprend un second logement b formant un troisième compartiment 31 de la gaine G, et destiné à recevoir un ensemble insonorisant 7. Ce troisième compartiment 31 est délimité par une pièce similaire à celle logeant les couloirs précités 12, 13, 14, et formée par une plaque métallique 36 pliée de manière à former un logement en forme de U dans lequel est placé un kit acoustique 33. Une plaque insonorisante 34 est placée entre la plaque précitée 36 et le premier compartiment 10 de la gaine G, et une plaque de plâtre 35 est fixée sur des équerres 37 placées à l'arrière de l'ensemble insonorisant 32. On notera également que la hauteur de la gaine G de l'invention correspond sensiblement à la hauteur de la pièce de logement dans lequel elle est destinée à être posée.

L'installation de la gaine G selon l'invention va être décrite brièvement à travers ce qui suit en référence aux figures.

Lorsque la gaine G sera destinée à être fixée en saillie sur un mur déjà réalisé, elle ne comportera pas nécessairement d'ensemble insonorisant 7 et ne sera donc constituée que d'un logement a pour l'appareillage électrique et les câbles 6. Dans ce cas, la gaine G, en appui sur le sol sera directement fixée contre le mur sans qu'aucun réglage de sa position ne soit nécessaire. Les différents modules électriques 1 à 4 seront alors fixés sur les rails 23, 24 et le raccordement des câbles 6 aux appareillages, effectué. Puis, les plaques isolantes 18, 19, 20, seront fixées sur les parties de goulotte n'ayant pas fait l'objet de raccordement, afin d'augmenter l'étanchéité entre les différents couloirs 12, 13, 14.

Ainsi, par exemple, après la fixation du tableau d'abonné 2, deux plaques 18, 20 seront fixées sur une partie des deux goulottes latérales 15, 17 associées aux câbles de courants faibles 21. De même, dans la zone réservée à la téléphonie E, les goulottes 16 et 17, seront obturées 19a, 20a, ainsi que la partie inférieure de la première goulotte 15 (18a). Puis la partie avant 9 de la colonne C formant couvercle, sera équipée de cloisons horizontales 25, 26, 27, plastrons 29, portes 28 et panneaux 30 adaptés à la configuration des différentes zones A, B, D, E, F.

Dans la version encastrée de la gaine, celle-ci pourra comprendre le second logement b destiné à contenir l'ensemble insonorisant 7. Celle-ci sera amenée en appui sur le sol, entre deux banches, puis fixée au sol, en haut des banches et dans le béton. Puis, après la formation du mur, les différents modules électriques 1, 2, 3, 4 seront fixés sur les rails 22, 23. Puis comme précédemment décrit, les plaques 18, 19, 20 d'obturation des goulottes 15, 16, 17 seront montées ainsi que la partie formant couvercle précitée 9.

On notera que l'ensemble insonorisant 7 sera constitué avantageusement de manière à conférer à la gaine G les mêmes caractéristiques d'affaiblissement acoustiques que le mur en béton.

L'installation de cette gaine G sera donc particulièrement simple et rapide car ne nécessitant plus de réglage précis de sa position préalablement à sa fixation. La gaine s'étendant sur toute la hauteur du mur et étant ainsi en appui sur le sol, présente une grande stabilité et résiste mieux aux contraintes mécaniques exercées par le béton.

La fixation des coffrets sur les rails s'effectue sans perçage ni scellement et permet le réglage du volume et du nombre des zones techniques en fonction des besoins par déplacement des cloisons horizontales et des plaques d'obturation des goulottes, d'où il résulte une grande modularité de la gaine. L'arrivée des câbles par le haut et par le bas, à partir des dalles est facilité et rend le câblage plus aisé.

En fonctionnement, l'isolation relative des différents couloirs de circulation des câbles et la possibilité d'assurer la continuité de la masse (CEM) permettent le montage, dans une seule gaine, de plusieurs coffrets ayant des fonctions différentes (distribution électrique, tableau de réseau intérieur, domotique etc.) par création de zones techniques, ce qui permet l'intégration de systèmes hétérogènes dans le logement, tout en supprimant les perturbations du matériel engendrées par les champs magnétiques. En outre, l'existence de ces trois couloirs de circulation, dissociant les câbles véhiculant des courants forts de ceux véhiculant des courants faibles, facilite le câblage.

On notera également le caractère évolutif de la gaine du point de vue de son équipement, dans la mesure où elle permet le remplacement d'un module par un autre ou bien d'une fonction par une autre, ainsi que du point de vue de son installation (avec ou sans kit acoustique, en saillie ou encastrée).

En outre, elle permet d'obtenir une sélectivité des accès aux différentes zones techniques séparées par une cloison horizontale et fermées par un plastron et une porte, ou bien un panneau fixe.

On notera enfin la possibilité, grâce à l'existence des trois couloirs, de réaliser la sélectivité d'accès aux câbles (ex : câbles d'alimentation ou du compteur), par l'utilisation ou non d'un outil, ou par la possibilité d'un plombage.

Cette gaine pourra donc être posée entre banches dans le cas d'une utilisation en logement collectif, ou bien incorporée dans un mur en moellon dans le cas d'un logement individuel ou bien directement fixée en saillie sur un mur.

## Revendications

1. Gaine pour la fixation de coffrets électriques (1) et/ou analogues en saillie sur un mur ou bien à l'intérieur d'un mur dans un logement, comprenant une colonne rigide (C), ladite colonne (C) comportant un logement de forme sensiblement parallélépipédique dans lequel sont prévus, situés au fond de la colonne, au moins deux couloirs séparés (12, 13, 14) s'étendant parallèlement à la direction longitudinale de la colonne (C), lesdits couloirs (12,13,14) recevant respectivement au moins deux ensembles de câbles de transport du courant (21,22) destinés a être raccordés sélectivement aux appareils logés dans les coffrets précités (1 à 4), lesdits coffrets étant logés dans ledit logement de manière successive, parallèlement à la direction longitudinale de la colonne (C),
caractérisée en ce que les coffrets précités (1 à 4) sont regroupés dans des zones (A, B, D, E, F) d'appareillages réalisant des fonctions électriques de même nature, les différentes zones (A, B, D, E, F) étant séparées à l'intérieur du logement (a) par des cloisons (25, 26, 27) s'étendant perpendiculairement à la paroi de fond (8a) de la colonne (C).

2. Gaine selon la revendication 1, caractérisée en ce que les fonctions électriques précitées sont la distribution électrique et/ou la domotique et/ou la téléphonie et/ou le contrôle d'accès.

3. Gaine selon la revendication 1 ou 2, caractérisée en ce que le logement précité (a) comporte un premier (10) et un second (11) compartiment de forme sensiblement parallélépipédique juxtaposés dans le sens de la profondeur de la colonne (C), le premier compartiment (10) recevant au moins deux couloirs séparés, juxtaposés dans le sens de la largeur de la colonne et destinés au transport de courants d'au moins deux types différents, le second compartiment (11) logeant les coffrets précités (1 à 4).

4. Gaine selon la revendication 3, caractérisée en ce que le premier compartiment (10) comporte deux couloirs (12, 13) destinés à recevoir respectivement les câbles de transport du courant faible (21) et les câbles de transport du courant fort (22).

5. Gaine selon la revendication 3, caractérisée en ce que les couloirs précités (12, 13, 14) sont au nombre de trois et comprennent deux couloirs latéraux (12, 14) recevant des câbles de transport du courant faible (21) et un couloir central (13) recevant des câbles de transport du courant fort (22).

6. Gaine selon l'une quelconque des revendications 3 à 5, caractérisée en ce que les couloirs (12, 13, 14) sont formés par des goulottes (15, 16, 17) fixées sur la paroi de fond (8a) du premier compartiment (10) et comportant sur leur face avant une ouverture (15b, 16b, 17b) permettant le raccordement des câbles (6, 21, 22) aux appareillages correspondants.

7. Gaine selon l'une quelconque des revendications 3 à 6, caractérisée en ce que les coffrets précités (1 à 4) sont fixés sur au moins un rail (23, 24) solidaire de la paroi de fond (8a) du premier compartiment (10) et s'étendant parallèlement à la direction longitudinale de la colonne (C).

8. Gaine selon la revendication 7, caractérisée en ce que les deux bords longitudinaux (16c, 16d) de l'ouverture (16b) de la goulotte centrale (16) forment respectivement deux rails de fixation (23, 24) des coffrets (1 à 4) s'étendant vers l'intérieur ou bien l'extérieur de la goulotte précitée (16).

9. Gaine selon l'une quelconque des revendications 3 à 8, caractérisée en ce que les différentes zones (A, B, D, E, F) sont fermées, sur la face avant du second compartiment (11), en fonction de l'accessibilité recherchée, par un plastron (29) et/ou une porte (28), ou bien un panneau fixe (30) n'autorisant l'accès qu'au moyen d'un outil.

10. Gaine selon l'une quelconque des revendications 6 à 9, caractérisée en ce que les portions de goulottes dans lesquelles aucun raccordement n'est effectué, sont fermées par des plaques (18, 19, 20) isolantes ou bien réalisées en un matériau permettant d'assurer la continuité de masse, lesdites plaques étant fixées sur les bords des ouvertures (15b, 16b, 17b) des goulottes correspondantes (15, 16, 17).

11. Gaine selon l'une quelconque des revendications 3 à 10, caractérisée en ce qu'elle comporte un second logement (b) définissant un troisième compartiment, situé à l'arrière du premier compartiment précité (10), et contenant un ensemble insonorisant (32).

12. Gaine selon l'une quelconque des revendications 1 à 11, caractérisée en ce que lorsqu'installée, la gaine est en appui sur le sol.

13. Gaine selon l'une quelconque des revendications précédentes, caractérisée en ce qu'elle s'étend sur toute la hauteur du mur (M).

14. Gaine selon l'une quelconque des revendications précédentes, caractérisée en ce que la colonne précitée (C) est réalisée en un matériau métallique ou plastique.

15. Gaine selon l'une quelconque des revendications précédentes, caractérisée en ce qu'elle comporte une zone (A) réservée à la distribution électrique comprenant un tableau d'abonné (2), et/ou une zone (B) réservée au contrôle d'accès comprenant un interphone (3) et/ou une zone (D) réservée à la domotique comprenant un boîtier de contrôle du chauffage 1, et/ou une zone (E) réservée à la téléphonie comprenant un tableau de réseau intérieur (1).

16. Gaine selon l'une quelconque des revendications précédentes, caractérisée en ce que les câbles (6) sont acheminés à travers la gaine (G), à partir des dalles supérieures ou inférieures du logement.

## Patentansprüche

1. Installationskanal mit einer biegesteifen Säule (C) für die Wandaufbau- oder Wandeinbaumontage von Eleklrogehäusen (1) und/oder ähnlichen Betriebsmitteln in Wohngebäuden, welche Säule (C) eine annähernd kastenförmige Aufnahme umfaßt, in der am Boden der Säule mindestens zwei getrennte, parallel zur Längsrichtung der Säule (C) verlaufende Unterkanäle (12, 13, 14) angeordnet sind, welche Unterkanäle (12, 13, 14) mindestens zwei getrennte Kabelanordnungen zur Stromführung (21, 22) enthalten, die dazu dienen, selektiv an in den genannten Gehäusen installierte Geräte angeschlossen zu werden (1 bis 4), wobei die genannten Gehäuse parallel zur Längsrichtung der Säule (C) aufeinanderfolgend in die genannte Aufnahme eingesetzt sind,
dadurch gekennzeichnet, daß die genannten Gehäuse (1 bis 4) in Abschnitten (A, B, D, E, F) mit Geräten ähnlicher elektrischer Funktionen zusammengefaßt sind, wobei die einzelnen Abschnitte (A, B, D, E, F) im Innern der Aufnahme (a) durch senkrecht zur Bodenwand (8a) der Säule angeordnete Schottungen (25, 26, 27) voneinander getrennt sind.

2. Installationskanal nach Anspruch 1, dadurch gekennzeichnet, daß es sich bei den genannten elektrischen Funktionen um Stromverteilung und/oder Gebäudesystemtechnik und/oder Fernsprechtechnik und/oder Zugangskontrolle handelt.

3. Installationskanal nach Anspruch 1 oder 2, dadurch gekennzeichnet, daß die genannte Aufnahme (a) ein erstes Abteil (10) und eine zweites Abteil (11) umfaßt, die annähernd kastenförmig ausgebildet und in der Tiefe der Säule (C) gesehen hintereinander angeordnet sind, wobei das erste Abteil (10) mindestens zwei in der Breite der Säule, nebeneinander angeordnete Unterkanäle zur Führung mindestens zweier unterschiedlicher Stromarten und das zweite Abteil (11) die genannten Gehäuse (1 bis 4) aufnimmt.

4. Installationskanal nach Anspruch 3, dadurch gekennzeichnet, daß das erste Abteil (10) zwei Unterkanäle (12, 13) umfaßt, die jeweils zur Aufnahme von Kabeln für die Schwachstromkreise (21) bzw. von Kabeln für die Starkstromkreise (22) dienen.

5. Installationskanal nach Anspruch 3, dadurch gekennzeichnet, daß drei von den genannten Unterkanälen (12, 13, 14) vorhanden sind, wobei zwei seitliche Unterkanäle (12, 14) die Kabel für die Schwachstromkreise (21) und ein mittlerer Unterkanal (13) die Kabel für die Starkstromkreise (22) aufnehmen.

6. Installationskanal nach irgendeinem der Ansprüche 3 bis 5, dadurch gekennzeichnet, daß die Unterkanäle (12, 13, 14) als Kabelwannen (15, 16, 17) ausgebildet sind, die auf der Bodenwand (8a) des ersten Abteils (10) befestigt sind und an ihrer Vorderseite eine Öffnung (15b, 16b, 17b) für den Anschluß der Kabel (6, 21, 22) an die jeweiligen Geräte aufweisen.

7. Installationskanal nach irgendeinem der Ansprüche 3 bis 6, dadurch gekennzeichnet, daß die genannten Elektrogehäuse (1 bis 4) auf mindestens einer, fest mit der Bodenwand (8a) des ersten Abteils (10) verbundenen und parallel zur Längsrichtung der Säule (C) verlaufenden Schiene (23, 24) befestigt sind.

8. Installationskanal nach Anspruch 7, dadurch gekennzeichnet, daß die beiden Längskanten (16c, 16d) der in der mittleren Kabelwanne (16) ausgebildeten Öffnung (16b) jeweils zwei, zur Innenseite oder zur Außenseite der genannten Kabelwanne (16) gerichtete Befestigungsschienen (23, 24) für die Elektrogehäuse (1 bis 4) bilden.

9. Installationskanal nach irgendeinem der Ansprüche 3 bis 8, dadurch gekennzeichnet, daß die verschiedenen Abschnitte (A, B, D, E, F) an der Vorderseite des zweiten Abteils (11) in Abhängigkeit vom gewünschten Grad der Zugänglichkeit durch eine Frontplatte (29) und/oder eine Tür (28) oder auch durch ein fest montiertes Panel (30) verschlossen sind, das nur mit Hilfe eines Werkzeugs geöffnet werden kann.

10. Installationskanal nach irgendeinem der Ansprüche 6 bis 9, dadurch gekennzeichnet, daß die Abschnitte der Kabelwannen, in denen keinerlei Anschlüsse vorgenommen werden, mit Platten (18, 19, 20) aus Isolierstoff oder einem Material verschlossen sind, das eine durchgängige Masseverbindung gewährleistet, wobei die genannten Platten an den Rändern der Öffnungen (15b, 16b, 17b) der jeweiligen Kabelwannen (15, 16, 17) befestigt sind.

11. Installationskanal nach irgendeinem der Ansprüche 3 bis 10, dadurch gekennzeichnet, daß er eine zweite Aufnahme (b) umfaßt, die ein hinter dem genannten ersten Abteil (10) angeordnetes und ein Schallschutzmodul (32) enthaltendes drittes Abteil bildet.

12. Installationskanal nach irgendeinem der Ansprüche 1 bis 11, dadurch gekennzeichnet, daß er sich nach der Installation auf dem Boden abstützt.

13. Installationskanal nach irgendeinem der vorhergehenden Ansprüche, dadurch gekennzeichnet, daß er sich über die gesamte Höhe der Mauerwand (M) erstreckt.

14. Installationskanal nach irgendeinem der vorhergehenden Ansprüche, dadurch gekennzeichnet, daß die genannte Säule (C) aus Metall oder Kunststoff besteht.

15. Installationskanal nach irgendeinem der vorhergehenden Ansprüche, dadurch gekennzeichnet, daß er vorzugsweise einen Stromverteilerabschnitt (A) mit einem Hauptinstallationsverteiler (2) und/oder einen Abschnitt (B) für Zugangskontrolle mit einer Gegensprechanlage (3) und/oder einen Abschnitt (D) für Gebäudeleittechnik mit einem Gehäuse zur Heizungssteuerung (1) und/oder einen Abschnitt (E) für Fernsprechtechnik mit einer Schaltanlage für ein hausinternes Netz (1) umfaßt.

16. Installationskanal nach irgendeinem der vorhergehenden Ansprüche, dadurch gekennzeichnet, daß die Kabel (6) über an der Oberseite bzw. der Unterseite der Aufnahme angeordneten Durchführungsplatten durch den Installationskanal (G) hindurchgeführt werden.

## Claims

1. A sheath for fixing electrical cabinets (1) and/or similar surface-mounted on a wall or inside a wall in a housing, comprising a rigid column (C), said column (C) comprising a housing of appreciably parallelepipedic shape in which there are provided, situated at the base of the column, at least two separate runners (12, 13, 14) extending parallel to the longitudinal direction of the column (C), said runners (12, 13, 14) respectively receiving at least two sets of cables (21, 22) conveying current designed to be selectively connected to the switchgear housed in the above-mentioned cabinets (1 to 4), said cabinets being housed in said housing in successive manner, parallel to the longitudinal direction of the column (C),
characterized in that the above-mentioned cabinets (1 to 4) are grouped in zones (A, B, D, E, F) of apparatuses performing electrical functions of the same nature, the different zones (A, B, D, E, F) being separated inside the housing (a) by partitions (25, 26, 27) extending perpendicularly to the back wall (8a) of the column (C).

2. The sheath according to claim 1, characterized in that the above-mentioned electrical functions are electrical distribution and/or building automation systems and/or telephony and/or access control.

3. The sheath according to claim 1 or 2, characterized in that the above-mentioned housing (a) comprises a first (10) and a second (11) compartment of appreciably parallelepipedic shape juxtaposed in the depthwise direction of the column (C), the first compartment (10) receiving at least two separate runners juxtaposed in the widthwise direction of the column and designed for conveying currents of at least two different types, the second compartment (11) housing the above-mentioned cabinets (1 to 4).

4. The sheath according to claim 3, characterized in that the first compartment (10) comprises two runners (12, 13) designed to receive respectively the cables conveying weak current (21) and the cables conveying strong current (22).

5. The sheath according to claim 3, characterized in that the above-mentioned runners (12, 13, 14) are three in number and comprise two lateral runners (12, 14) receiving cables conveying weak current (21) and a central runner (13) receiving cables conveying strong current (22).

6. The sheath according to any one of the claims 3 to 5, characterized in that the runners (12, 13, 14) are formed by trunkings (15, 16, 17) fixed onto the back wall (8a) of the first compartment (10) and comprising on their front face an opening (15b, 16b, 17b) enabling connection of the cables (6, 21, 22) to the corresponding switchgear.

7. The sheath according to any one of the claims 3 to 6, characterized in that the above-mentioned cabinets (1 to 4) are fixed onto at least one rail (23, 24) securedly united to the back wall (8a) of the first compartment (10) and extending parallel to the longitudinal direction of the column (C).

8. The sheath according to claim 7, characterized in that the two longitudinal edges (16c, 16d) of the opening (16b) of the central trunking (16) respectively form two fixing rails (23, 24) for fixing cabinets (1 to 4) extending towards the inside or the outside of the above-mentioned trunking (16).

9. The sheath according to any one of the claims 3 to 8, characterized in that the different zones (A, B, D, E, F) are closed, on the front face of the second compartment (11), according to the accessibility required, by a front plate (29) and/or a door (28), or a fixed panel (30) allowing access by means of a tool only.

10. The sheath according to any one of the claims 6 to 9, characterized in that the portions of trunkings in which no connection is made are closed by plates (18, 19, 20) which are insulating or made of a material enabling ground continuity to be ensured, said plates being fixed onto the edges of the openings (15b, 16b, 17b) of the corresponding trunkings (15, 16, 17).

11. The sheath according to any one of the claims 3 to 10, characterized in that it comprises a second housing (b) defining a third compartment, situated at the rear of the above-mentioned first compartment (10) and containing a sound-proofing assembly (32).

12. The sheath according to any one of the claims 1 to 11, characterized in that when installed, the sheath is pressing on the floor.

13. The sheath according to any one of the foregoing claims, characterized in that it extends over the whole height of the wall (M).

14. The sheath according to any one of the foregoing claims, characterized in that the above-mentioned column (C) is made of a metallic or plastic material.

15. The sheath according to any one of the foregoing claims, characterized in that it comprises a zone (A) reserved for electrical distribution comprising a subscriber switchboard (2), and/or a zone (B) reserved for access control comprising an intercom (3) and/or a zone (D) reserved for building automation systems comprising a heating control box 1, and/or a zone (E) reserved for telephony comprising an intemal power system switchboard (1).

16. The sheath according to any one of the foregoing claims, characterized in that the cables (6) are run through the sheath (G) from upper or lower floor slabs of the housing.
